# EUROPÄISCHE PATENTSCHRIFT

(11) **EP 3 822 666 B1**
(45) Veröffentlichungstag und Bekanntmachung des Hinweises auf die Patenterteilung: **13.03.2024**
(21) Anmeldenummer: 20186391.7
(22) Anmeldetag: 17.07.2020
(51) Int. Cl.: G01V 8/20, F16P 3/14

(54) **LICHTSCHRANKENANORDNUNG**
LIGHT BARRIER DEVICE
AGENCEMENT DE BARRIÈRES LUMINEUSES

(30) Priorität: 15.11.2019 DE 202019106396 U
(43) Veröffentlichungstag der Anmeldung: 19.05.2021
(73) Patentinhaber: Leuze electronic GmbH + Co. KG, 73277 Owen/Teck (DE)
(72) Erfinder: Feller, Bernhard, 86316 Friedberg (DE); Koperski, Joachim, 85521 Ottobrunn (DE); Aldiek, Norbert, 73230 Kirchheim/Teck (DE); Hörderich, Johann, 82291 Mammendorf (DE); Olbrich, Sebastian, 80992 München (DE)
(74) Vertreter: Ruckh, Rainer Gerhard

(56) Entgegenhaltungen:
- EP-A1- 0 598 630
- DE-A1- 4 423 264
- JP-A- 2005 049 172

## Beschreibung

Die Erfindung betrifft eine Lichtschrankenanordnung gemäß dem Oberbegriff des Anspruchs 1.

Eine derartige Lichtschrankenanordnung kann mehrere einzelne Lichtschranken aufweisen. Insbesondere kann die Lichtschrankenanordnung als Lichtvorhang ausgebildet sein, bei welchem in einem ersten Gehäuse der Sendereinheit mehrere Sender integriert sind und in einem zweiten Gehäuse der Empfängereinheit mehrere Empfänger integriert sind.

Generell sind die Sendereinheit und die Empfängereinheit an gegenüberliegenden Rändern eines Überwachungsbereichs angeordnet, innerhalb dessen mit der Lichtschrankenanordnung eine Objektdetektion erfolgt. Vor dem Betrieb der Lichtschrankenanordnung müssen die Sendereinheit und die Empfängereinheit so gegeneinander ausgerichtet werden, dass bei freiem Überwachungsbereich das Sendelicht jedes Senders auf den zugeordneten Empfänger trifft.

Eine Schwierigkeit besteht hierbei darin, dass die Sender im Allgemeinen Sendelicht im Infrarotbereich emittieren, das für das menschliche Auge nicht sichtbar ist.

Um die Sendereinheit und die Empfängereinheit gegeneinander auszurichten ist es bekannt, als Ausrichthilfe einen Lichtimpuls an der Sendereinheit zu fixieren. Der Lichtimpuls strahlt einen sichtbaren Laserstrahl ab, der auf die Empfängereinheit geführt ist. Anhand der auf der Empfängereinheit abgebildeten Laserlichtfläche kann die Empfängereinheit relativ zur Sendereinheit, oder umgekehrt, ausgerichtet werden.

Nachteilig hierbei ist, dass der Lichtimpuls eine zusätzliche Einrichtung darstellt, womit ein zusätzlicher Konstruktions- und Kostenaufwand verbunden ist. Weiterhin ist nachteilig, dass der Lichtimpuls an der Sendereinheit montiert werden muss, was umständlich und zeitaufwändig ist.

Die EP 0 598 630 A1 betrifft einen Lichtvorhang mit einer Sendereinheit, die eine Anordnung von Lichtstrahlen emittierenden Sendern aufweist und mit einer Empfängereinheit, die eine Anordnung von Lichtstrahlen empfangenden Empfängern aufweist. Die Anzahl der Sender entspricht der Anzahl der Empfänger. Die Empfänger werden einzeln nacheinander mit einem ersten Schieberegister angesteuert. Zur Statusanzeige der Ausrichtung der Sendeeinheit relativ zur Empfängereinheit sind optische Anzeigemittel in Form von sichtbarem Licht emittierenden Leuchtdioden vorgesehen. Die Leuchtdioden werden mit einem zweiten Schieberegister angesteuert.

Die DE 44 23 264 A1 betrifft eine optoelektronische Vorrichtung zum Übertragen von in Form von Bitfolgen vorliegenden Datenworten mit einem einen Sendelichtstrahl emittierenden Sender und einem Empfänger, wobei die Bitfolgen dem Sendelichtstrahl in Form einer Kodierung aufgeprägt sind. Innerhalb von Sendepausen, in denen keine Datenworte übertragen werden, werden innerhalb vorgegebener Zeitintervalle Überwachungs-Sendelichtimpulse mit einer von den Datenworten verschiedenen, als Pulsfolge ausgebildeten Kodierung so ausgesandt, dass die mittlere Sendeleistung einen vorgegebenen Schwellwert nicht überschreitet. Bei Nichterkennung einer Anzahl von Überwachungs-Sendelichtimpulsen im Empfänger wird die Sendeleistung des Senders reduziert. Weiterhin sind Anzeigemittel vorgesehen, die verschiedene Anzeigezustände einnehmen, die eindeutig von der auf den Empfänger auftretenden Lichtmenge sind.

Die JP 2005 049 172 A betrifft eine mehrachsige Lichtschrankenanordnung mit mehreren Paaren von Lichtstrahlen emittierenden Sendern und Lichtstrahlen empfangenden Empfängern. Die Empfänger werden mittels einer Schiebekette angesteuert. Weiterhin sind Anzeigemittel vorgesehen, die Abnormalitätszustände anzeigen. Die Anzeigemittel weisen Lampen auf, die mit einem weiteren Schieberegister angesteuert werden.

Der Erfindung liegt die Aufgabe zugrunde, eine einfache, sichere und kostengünstige Justagemöglichkeit für eine Lichtschrankenanordnung der eingangs genannten Art bereitzustellen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Lichtschrankenanordnung mit einer Sendereinheit und einer Empfängereinheit. Die Sendereinheit weist mehrere Lichtstrahlen emittierende Sender und die Empfängereinheit mehrere Sendelichtstrahlen empfangende Empfänger auf. Weiterhin weist die Lichtschrankenanordnung eine Ausrichteinheit zur Ausrichtung der Sendereinheit und Empfängereinheit auf. Die Ausrichteinheit weist eine Anordnung von Anzeigeelementen auf, die mittels einer Schiebekette gesteuert werden. Mittels der Schiebekette erfolgt eine Steuerung der Aktivierung der Empfänger. Die Anzeigeelemente werden mit der Schiebekette adressiert. In der Ausrichteinheit wird anhand von Ausrichtkriterien eine Ausrichtgüte für einen oder mehrere Empfänger ermittelt, wobei die Anzeigeelemente zur Anzeige von Ausrichtgüten ausgebildet sind. Die Anzeigeelemente sind als optische Anzeigeelemente ausgebildet.

Ein wesentlicher Vorteil der Erfindung besteht darin, dass mittels der Schiebekette mit geringem Schaltungsaufwand beliebig viele Anzeigeelemente gesteuert werden können. Die einzelnen Anzeigeelemente visualisieren aktuelle Informationen über die Ausrichtung der Lichtschrankenanordnung, das heißt der Sendereinheit relativ zur Empfängereinheit angezeigt werden. Über die Schiebekette erfolgt auch eine Adressierung der einzelnen Anzeigeelemente, so dass diese selektiv angesteuert werden, wodurch eine flexible zeit- und ortsabhängige Anzeigemöglichkeit geschaffen wird.

Insbesondere ist vorteilhaft, dass durch den Einsatz der Schiebekette die Steuerung und Adressierung mit einer geringen Anzahl von Leitungen realisiert werden kann, wodurch der Hardwareaufwand für die Ansteuerung der Anzeigeelemente gering gehalten werden kann.

Erfindungsgemäß erfolgt mittels der Schiebekette eine Steuerung der Aktivierung der Empfänger.

Dies ist insbesondere dann der Fall, wenn die Lichtschrankenanordnung als Lichtvorhang ausgebildet ist.

In diesem Fall kann die Schiebekette, die zur Steuerung der Aktivierung der Empfänger verwendet wird, auch noch zur Steuerung der Anzeigeelemente mitgenutzt werden wodurch der Schaltungsaufwand der Lichtschrankenanordnung besonders gering gehalten werden kann.

Erfindungsgemäß wird in der Ausrichteinheit anhand von Ausrichtkriterien eine Ausrichtgüte für einen oder mehrere Empfänger ermittelt, wobei die Anzeigeelemente zur Anzeige von Ausrichtgüten ausgebildet sind.

Damit wird einem Benutzer eine effiziente Ausrichthilfe zur Ausrichtung der Lichtschrankenanordnung bereitgestellt.

Besonders vorteilhaft wird mit den Anzeigeelementen die Ausrichtgüte unterschiedlicher Empfänger angezeigt.

Zweckmäßig ist hierzu ein Anzeigeelement dem oder den Empfängern, deren Ausrichtgüte es anzeigt, räumlich zugeordnet.

Damit kann eine ortsaufgelöste Anzeige der Ausrichtgüte der Empfänger vorzugsweise über die gesamte Länge der Empfängereinheit realisiert werden. Dadurch können auch Verkippungen oder Verdrehungen der Sendereinheit und der Empfängereinheit relativ zueinander erfasst und angezeigt werden. Damit erhält ein Benutzer besonders detaillierte Informationen über den aktuellen Zustand der Ausrichtung des Lichtvorhangs und kann diesen dadurch besonders exakt ausrichten.

Die Einsatzmöglichkeiten der Anzeigeelemente der erfindungsgemäßen Lichtschrankenanordnung können dahingehend erweitert sein, dass mit diesen auch andere Informationen, insbesondere Informationen über aktuelle Objektdetektionen, insbesondere Objektfeststellungssignale, angezeigt werden.

Erfindungsgemäß sind die Anzeigeelemente als optische Anzeigeelemente ausgebildet.

Dabei können die Anzeigeelemente Blinksequenzen von sichtbaren optischen Pulsen emittieren.

Insbesondere ist die Ausrichtgüte in der Frequenz, dem Puls-/Pausenverhältnis, der Anzahl von Pulsen in vorgegebenen Pulsgruppen, der Pulsdauern oder der Pausen zwischen Pulsen der sichtbaren optischen Pulse codiert.

Gemäß einer konstruktiv vorteilhaften Ausgestaltung sind Blinksequenzen eines Anzeigeelements durch in dem zugeordneten Anzeigespeicherelement gespeicherte Informationen oder über separate Zuleitungen vorgegeben.

Gemäß einer vorteilhaften Ausführungsform emittieren die Sender Sendelichtstrahlen in Form von Lichtimpulsen.

In diesem Fall können in der Ausrichteinheit als Ausrichtkriterium die Pulsbreiten der am Empfänger registrierten Lichtimpulse bestimmt werden.

Die Pulsbreiten können aus folgendem Grund als Ausrichtkriterium für die Ausrichtung der Sendereinheit relativ zur Empfängereinheit ausgenutzt werden. Bei einer unzureichenden Ausrichtung trifft nur ein kleiner Teil eines Lichtimpulses auf den zugeordneten Empfänger. Der Empfänger mit den vorgeordneten Bauelementen wie Verstärkern wird dann nicht in der Sättigung sondern im linearen Bereich betrieben, sodass sich eine kleine Pulsbreite der empfangenden Lichtimpulse ergibt. Je besser die Ausrichtung der Sendereinheit relativ zur Empfängereinheit, desto größer ist die auf den Empfänger auftreffende Lichtmenge der Lichtimpulse. Je größer diese Lichtmenge ist, umso mehr wird der Empfänger in der Sättigung betrieben und umso größer ist die Pulsbreite. Damit liefert die Pulsbreite ein zuverlässiges Maß für die Ausrichtgüte der Sendereinheit relativ zur Empfängereinheit.

Alternativ können als Ausrichtkriterium die Amplituden der Empfangssignale der Empfänger herangezogen werden.

In diesem Fall können mit Schwellwerten oder Spitzenwertdetektoren die Amplituden der Empfangssignale als Maß für die auf die Empfänger auftreffenden Lichtmengen und damit als Maß für die Ausrichtgeräte der Lichtschrankenanordnung ermittelt werden.

Die Lichtschrankenanordnung weist generell eine Auswerteeinheit auf, in der abhängig von Empfangssignalen ein Objektfeststellungssignal generiert wird. Das Objektfeststellungssignal ist vorzugsweise als binäres Schaltsignal ausgebildet, dessen Schaltzustände angeben, ob sich ein Objekt im Überwachungsbereich befindet oder nicht. Im einfachsten Fall weist die Auswerteeinheit eine Rechnereinheit auf, die von einem Controller oder dergleichen gebildet ist. Für den Fall, dass die Lichtschrankenanordnung ein Sicherheitssensor ist, der für den Einsatz im Bereich der Sicherheitstechnik einen fehlersicheren Aufbau aufweist, kann die Auswerteeinheit einen redundanten Aufbau mit zwei sich gegenseitig zyklisch überwachenden Rechnereinheiten aufweisen.

Die Erfindung wird im Folgenden anhand der Zeichnungen erläutert. Es zeigen:
- Figur 1:: Ausführungsbeispiel der erfindungsgemäßen Lichtschrankenanordnung in Form eines Lichtvorhangs.
- Figur 2:: Schaltungsanordnung einer Ausrichteeinheit für den Lichtvorhang gemäß Figur 1.
- Figur 3:: Schaltungsanordnung zur Anordnung von Empfängern und Anzeigeelementen für den Lichtvorhang gemäß Figur 1.
- Figur 4a, 4b:: Unterschiedliche Varianten der Anordnung von Anzeigeelementen an einer Empfängereinheit des Lichtvorhangs gemäß Figur 1.
- Figur 5a, 5b:: Erstes Beispiel von Blinksequenzen eines Anzeigeelements gemäß den Figuren 3, 4a, 4b.
- Figur 6a, 6b, 6c:: Zweites Beispiel von Blinksequenzen eines Anzeigeelements gemäß den Figuren 3, 4a, 4b.
- Figur 7a - 7f:: Drittes Beispiel von Blinksequenzen eines Anzeigeelements gemäß den Figuren 3, 4a, 4b.
- Figur 8a - 8e:: Viertes Beispiel von Blinksequenzen eines Anzeigeelements gemäß den Figuren 3, 4a, 4b.

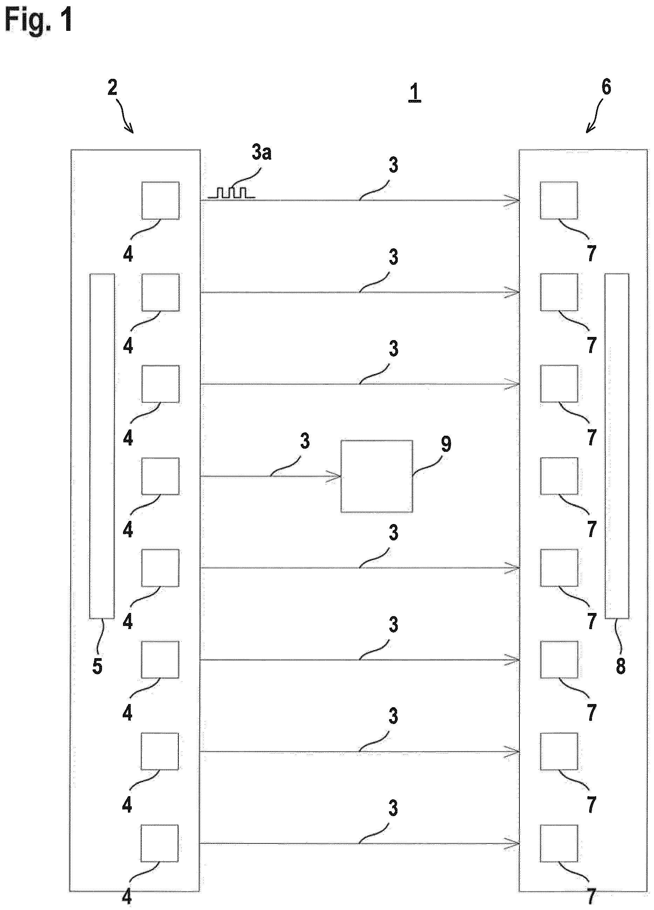

Figur 1 zeigt schematisch ein Ausführungsbeispiel der erfindungsgemäßen Lichtschrankenanordnung in Form eines Lichtvorhangs 1.

Der Lichtvorhang 1 dient zur Objekterfassung in einem Überwachungsbereich. Der Lichtvorhang 1 weist eine Sendereinheit 2 mit einem Gehäuse auf, in welchem eine Reihenanordnung von Sendelichtstrahlen 3 emittierenden Sendern 4 vorgesehen ist. Die Sender 4, die von Leuchtdioden oder dergleichen gebildet sind, emittieren Sendelichtstrahlen 3 in Form von Lichtimpulsen 3a im Infrarotbereich, wie für den ersten Sender 4 in Figur 1 schematisch dargestellt. Die Sender 4 werden von einer Sendersteuerung 5 gesteuert.

Der Lichtvorhang 1 weist weiterhin eine Empfängereinheit 6 auf, in deren Gehäuse eine Reihenanordnung von Empfängern 7 in Form von Fotodioden oder dergleichen sowie eine Auswerteeinheit 8 integriert ist.

Die Sendereinheit 2 und die Empfängereinheit 6 sind an gegenüberliegenden Rändern des Überwachungsbereichs so angeordnet, dass bei freiem Überwachungsbereich die Sendelichtstrahlen 3 eines Senders 4 auf den zugeordneten gegenüberliegenden Empfänger 7 treffen, wie in Figur 1 dargestellt. Jeder Sender 4 bildet mit dem zugeordneten Empfänger 7 ein Sender-Empfänger-Paar.

Die Sender-Empfänger-Paare werden in bekannter Weise über eine optische Synchronisierung zyklisch einzeln nacheinander aktiviert. Im vorliegenden Fall sind acht Sender-Empfänger-Paare vorgesehen. Natürlich kann ein Lichtvorhang 1 auch eine andere Anzahl von Sender-Empfänger-Paaren aufweisen.

Objekte 9 im Überwachungsbereich werden dadurch erfasst, dass der Strahlengang der Sendelichtstrahlen 3 wenigstens eines Sender-Empfänger-Paars unterbrochen wird, wie in Figur 1 dargestellt.

In der Auswerteeinheit 8 wird in Abhängigkeit der Empfangssignale ein Objektfeststellungssignal generiert, das über einen Ausgang an eine externe Einheit ausgegeben wird. Im vorliegenden Fall ist das Objektfeststellungssignal als binäres Schaltsignal generiert, dessen Schaltzustände angeben, ob sich ein Objekt 9 im Überwachungsbereich befindet oder nicht.

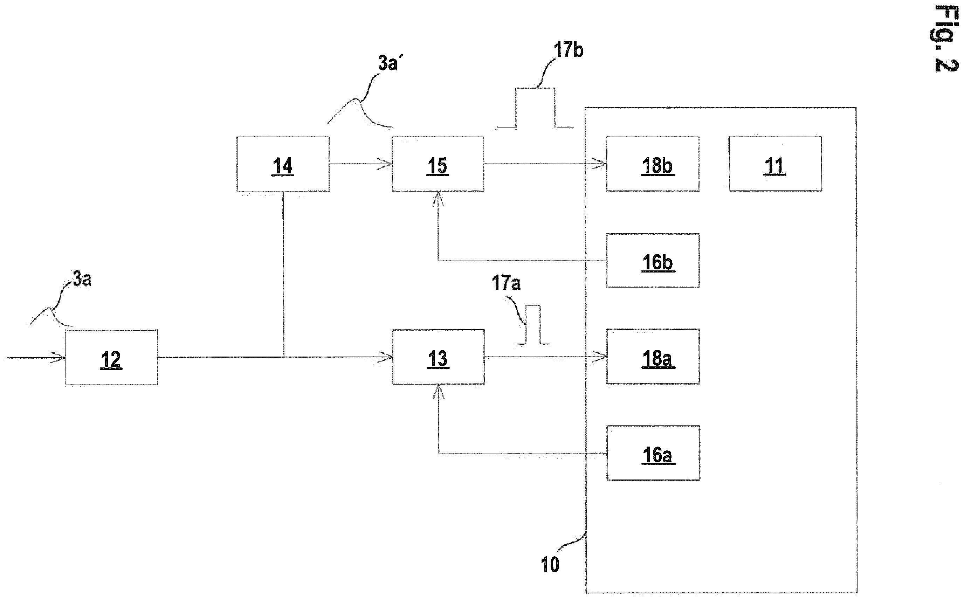

Figur 2 zeigt eine Rechnereinheit in Form eines Controllers 10, als Bestandteil der Auswerteeinheit 8 des Lichtvorhangs 1. Der Controller 10 weist eine CPU 11 auf, die die einzelnen Komponenten des Controllers 10 steuert. Der Controller 10 ist Bestandteil einer Ausrichteeinheit, die zur Ausrichtung der Sendereinheit 2 relativ zur Empfängereinheit 6 dient.

In der Ausrichteeinheit die Pulsbreiten der in den Empfängern 7 registrierten Lichtimpulsen 3a als Ausrichtkriterium für die Ausrichtung ermittelt. Alternativ können auch die Amplituden der Empfangssignale der Empfänger als Ausrichtkriterium herangezogen werden.

Die Figur 2 zeigt einen Verstärker 12, in welchem ein an einem Empfänger 7 registrierten Lichtimpuls 3a verstärkt wird. Generell kann für jeden Empfänger 7 ein Verstärker 12 zugeordnet sein. Alternativ ist ein Verstärker 12 vorhanden, dem im Multiplexbetrieb die Empfangssignale aller Empfänger 7 zugeführt ist.

Das am Ausgang des Verstärkers 12 anstehende Signal 17a, 17b wird einerseits direkt einem ersten Komparator 13 zugeführt und andererseits über einen Tiefpass 14 einem zweiten Komparator 15 zugeführt. Wie in Figur 2 schematisch dargestellt, wird der Lichtimpuls 3a` durch die Tiefpass-Filterung verbreitert.

Mittels eines ersten Analog-Digital-Wandlers 16a wird eine einstellbare Triggerschwelle für den ersten Komparator 13 vorgesehen. Mit einem zweiten Analog-Digital-Wandler 16b wird eine einstellbare Triggerschwelle für den zweiten Komparator 15 vorgegeben. Alternativ können auch feste Triggerschwellen vorgegeben werden.

Durch die Triggerschwelle wird aus den analogen Lichtimpulsen 3a, 3a` eine Folge von binären Signalen 17a, 17b generiert. Der "high" Zustand eines binären Signals 17a, 17b entspricht einem Vorhandensein eines Lichtimpulses 3a, 3a`.

Diese Signale 17a, 17b werden über einen Timereingang 18a, 18b oder einen Digitaleingang dem Controller 10 zugeführt. Im Controller 10, insbesondere in der CPU 11, ist eine Zeitmesseinheit integriert, anhand derer die Zeitintervalle der "high" Zustände der digitalen Signale 17a, 17b und damit der Pulsbreite der Lichtimpulse 3a gemessen werden.

Im vorliegenden Fall erfolgt eine Bestimmung der Pulsbreite, indem in der Zeitmesseinheit die digitalen Signale 17a, 17b beider Komparatoren 13, 15 ausgewertet werden. Generell ist es auch möglich nur die Signale 17a, 17b eines Komparators 13, 15 auszuwerten.

Die Pulsbreiten der Lichtimpulse 3a der Empfänger 7 werden als Ausrichtkriterium in der Ausrichteeinheit ausgewertet. Dabei wird aus den Pulsbreiten die Ausrichtgüte bestimmt, die umso höher ist, desto größer die Pulsbreiten sind.

Prinzipiell können nur die Lichtimpulse 3a eines Empfängers 7 oder einer Teilmenge der Empfänger 7 ausgewertet werden. Im vorliegenden Fall werden für alle Empfänger 7 die Pulsbreiten zur Ermittlung der Ausrichtgüte bestimmt.

Die ermittelte Ausrichtgüte wird über Anzeigeelemente 19a -19f angezeigt. Die Anzeigeelemente 19a -19f bilden Anzeigemittel, die sichtbares Licht emittieren. Im einfachsten Fall sind die Anzeigeelemente 19a - 19f von Leuchtdioden gebildet, die sichtbares Licht emittieren.

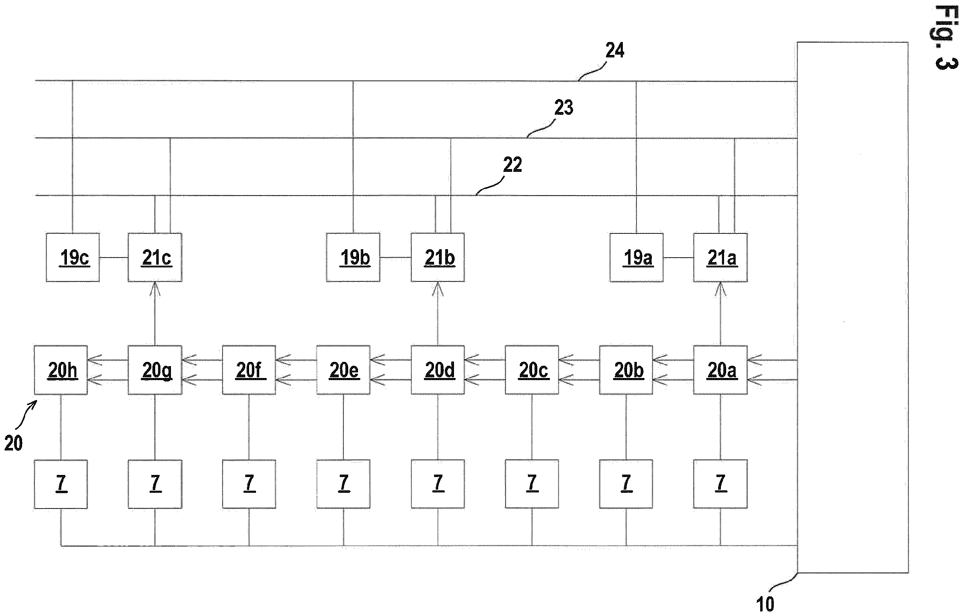

Figur 3 zeigt die erfindungsgemäße Ansteuerung der Empfänger 7 und der Anzeigeelemente 19a, 19b, 19c über den Controller 10. Im vorliegenden Fall sind drei Anzeigeelemente 19a, 19b, 19c vorgesehen.

Zur Ansteuerung der acht Empfänger 7 ist eine Schiebekette 20 mit acht Schiebeketteelementen 20a - 20h vorgesehen, die zum Beispiel von Flipflops gebildet sind. Durch die Steuerung des Controllers 10 wird ein Bitwert zum Beispiel eine "1" durch die Schiebeketteelemente 20a - 20h durchgeschoben, wodurch die Empfänger 7 einzeln nacheinander aktiviert werden.

Diese Schiebekette 20 wird auch zur Steuerung der Anzeigeelemente 19a, 19b, 19c verwendet. Jedem Anzeigeelement 19a, 19b, 19c ist ein Anzeigespeicherelement 21a, 21b, 21c zugeordnet, das von einem Flipflop gebildet ist. Durch Steuerleitungen 22, 23, 24 erfolgt über den Controller 10 die Steuerung und Adressierung derart, dass dann wenn über das Schiebeketteelement 20a das erste Anzeigespeicherelement 21a, über das Schiebeketteelement 20d das zweite Anzeigespeicherelement 21b und über das Schiebeketteelement 20g das dritte Anzeigespeicherelement 21c aktiviert wird. Besonders vorteilhaft ist eine Anordnung, bei der die Schiebekette 20 sowohl zur Adressierung der Empfangselemente (20a ... 20h) als auch zur Adressierung der Anzeigeelemente 19a, b, c verwendet wird. Es könnte aber auch eine separate Schiebekette für Empfangselemente und Anzeigeelemente angeordnet sein.

In den Anzeigespeicherelementen 21a, 21b, 21c sind zudem Informationen gespeichert, in welcher Weise bei Aktivierung des jeweiligen Anzeigespeicherelements 21a, 21b, 21c das zugeordnete Anzeigeelement 19a, 19b, 19c sichtbares Licht mit einer bestimmten Blinksequenz emittiert, wobei die jeweilige Blinksequenz die aktuelle Ausrichtgüte signalisiert.

In einer alternativen Ausgestaltung kann der Informationswechsel der Anzeigeelemente 19a, 19b, 19c auch über eine der Steuerleitungen 22, 23, 24 durchgeführt werden.

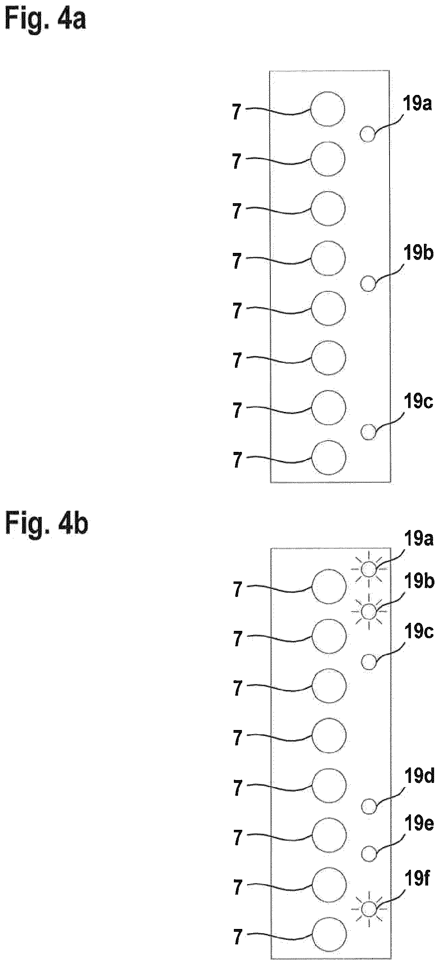

Figur 4a zeigt die Anordnung der Anzeigeelemente 19a - 19c an der Frontseite der Empfängereinheit 6 mit den dort hinter einer Scheibe liegenden Empfängern 7.

Wie aus 4a ersichtlich, ist das erste Anzeigeelement 19a den beiden oberen Empfängern 7 zugeordnet und zeigt die aktuelle in der Ausrichteeinheit ermittelte Ausrichtgüte für diese beiden Empfänger 7 an. Entsprechend zeigt das Anzeigeelement 19b, das den mittleren Empfängern 7 zugeordnet ist, die aktuelle Ausrichtgüte für diese beiden Empfänger 7 an. Schließlich ist das dritte Anzeigeelement 19c den beiden unteren Empfängern 7 zugeordnet und zeigt für diese die in der Ausrichteeinheit ermittelte Ausrichtgüte an.

Generell sind auch andere Anordnungen von Anzeigeelementen 19a - 19f an der Empfängereinheit 6 möglich. So zeigt Figur 4b eine Anordnung mit Anzeigeelementen 19a - 19c zur Anzeige der Ausrichtgüte der Empfänger 7 im oberen Bereich des Lichtvorhangs 1 und eine Anordnung mit Anzeigeelementen 19d - 19f zur Anzeige der Ausrichtgüte der Empfänger 7 im unteren Bereich des Lichtvorhangs 1.

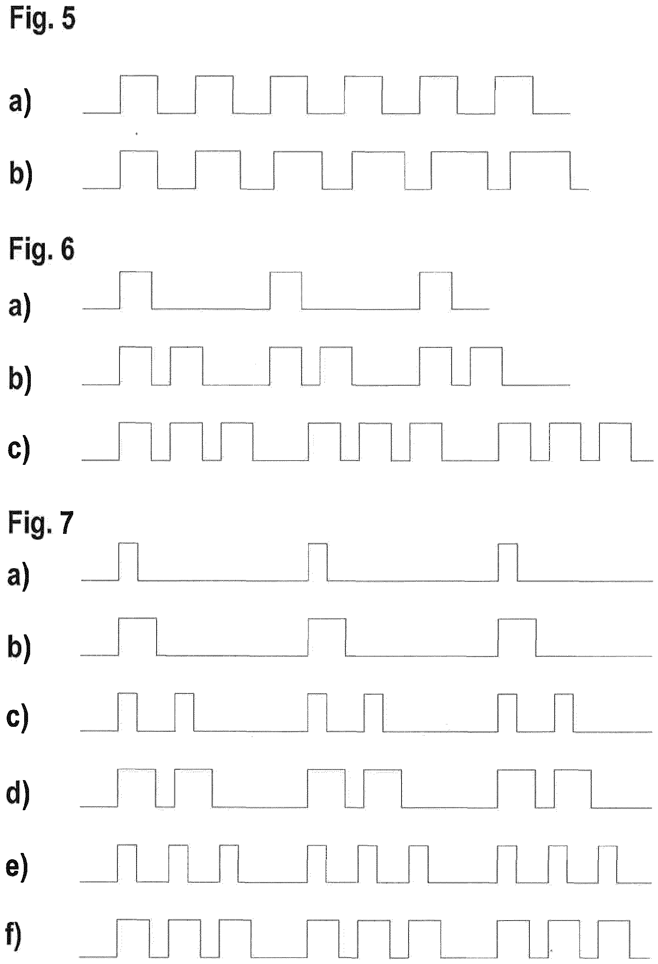

Die Figuren 5a, 5b zeigen ein erstes Beispiel von unterschiedlichen Blinksequenzen eines Anzeigeelements 19a - 19f. In diesem Fall wird das Puls-/Pausenverhältnis von sichtbaren Anzeigelichtpulsen des Anzeigeelements 19a - 19f variiert, um unterschiedliche Ausrichtgüte anzuzeigen.

Die Figuren 6a, 6b, 6c zeigen ein weiteres Beispiel von unterschiedlichen Blinksequenzen eines Anzeigeelements 19a - 19f zur Anzeige unterschiedlicher Ausrichtgüten. Je nach Ausrichtgüte emittiert das Anzeigeelement 19a - 19f sichtbares Licht in Form von Pulsgruppen mit unterschiedlichen Anzahlen einzelner Anzeigelichtpulse. Beispielsweise kann mit der Aussendung von Pulsgruppen gemäß Figur 6a eine geringe Ausrichtgüte, mit der Aussendung von Pulsgruppen gemäß Figur 6b eine mittlere Ausrichtgüte und mit der Aussendung von Pulsgruppen gemäß Figur 6c eine hohe Ausrichtgüte von Anzeigeelementen 19a - 19f angezeigt werden.

Die Figuren 7a - 7f zeigen ein weiteres Beispiel von unterschiedlichen Blinksequenzen eines Anzeigeelements 19a - 19f zur Anzeige unterschiedlicher Ausrichtgüte. Bei dieser Ausführungsform wird nicht nur die Anzahl von Anzeigelichtpulsen innerhalb einer Pulsgruppe, wie bei der Ausführungsform gemäß den Figuren 6a - 6c sondern zusätzlich auch deren Puls-/Pausenverhältnis geändert.

Dabei wird mit den Anzeigelichtpulsen ausgehend von Figur 7a bis Figur 7f eine kontinuierlich bessere Ausrichtgüte angezeigt.

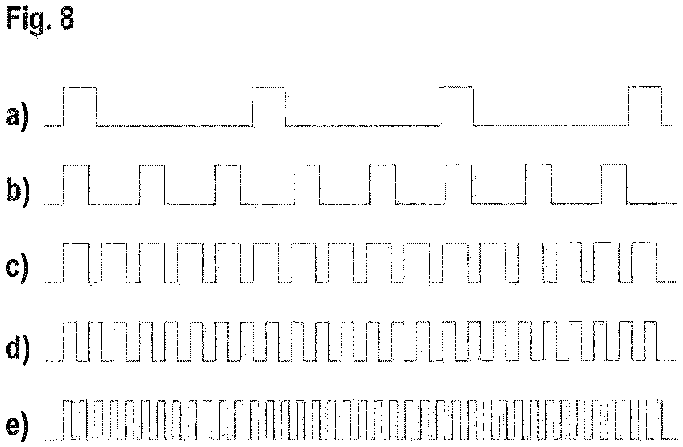

Die Figuren 8a - 8e zeigen ein weiteres Beispiel von unterschiedlichen Blinksequenzen eines Anzeigeelements 19a - 19f zur Anzeige unterschiedlicher Ausrichtgüte. Bei dieser Ausführungsform werden die Pulsfolgefrequenzen und Pulsdauern der einzelnen Anzeigelichtpulse variiert. Dabei wird mit den Anzeigelichtpulsen ausgehend von Figur 8a bis Figur 8e eine kontinuierliche bessere Ausrichtgüte mittels des Anzeigeelements 19a - 19f angezeigt.

### Bezugszeichenliste

- (1): Lichtvorhang
- (2): Sendereinheit
- (3): Sendelichtstrahlen
- (3a, 3a'): Lichtimpuls
- (4): Sender
- (5): Sendersteuerung
- (6): Empfängereinheit
- (7): Empfänger
- (8): Auswerteeinheit
- (9): Objekt
- (10): Controller
- (11): CPU
- (12): Verstärker
- (13): Komparator, erster
- (14): Tiefpass
- (15): Komparator, zweiter
- (16a): Analog-Digital-Wandler, erster
- (16b): Analog-Digital-Wandler, zweiter
- (17a, b): Signal
- (18a, b): Timereingang
- (19a - 19f): Anzeigeelement
- (20): Schiebekette
- (20a - 20h): Schiebeketteelement
- (21a, b, c): Anzeigespeicherelement
- (22): Steuerleitung
- (23): Steuerleitung
- (24): Steuerleitung

## Patentansprüche

1. Lichtschrankenanordnung mit einer Sendereinheit (2) und einer Empfängereinheit (6), wobei die Sendereinheit (2) mehrere Sendelichtstrahlen (3) emittierende Sender (4) und die Empfängereinheit (6) mehrere Sendelichtstrahlen (3) empfangende Empfänger (7) aufweist, und mit einer Ausrichteinheit zur Ausrichtung der Sendereinheit (2) und Empfängereinheit (6), wobei die Ausrichteinheit eine Anordnung von Anzeigeelementen (19a - 19f) aufweist, die mittels einer Schiebekette (20) gesteuert werden, **dadurch gekennzeichnet, dass** mittels der Schiebekette (20) eine Steuerung der Aktivierung der Empfänger (7) erfolgt, dass die Anzeigeelemente (19a - 19f) mit der Schiebekette (20) adressiert werden, dass in der Ausrichteinheit anhand von Ausrichtkriterien eine Ausrichtgüte für einen oder mehrere Empfänger (7) ermittelt wird, wobei die Anzeigeelemente (19a - 19f) zur Anzeige von Ausrichtgüten ausgebildet sind, und dass die Anzeigeelemente (19a - 19f) als optische Anzeigeelemente ausgebildet sind.

2. Lichtschrankenanordnung nach Anspruch 1, **dadurch gekennzeichnet, dass** jedem Anzeigeelement (19a - 19f) ein Anzeigespeicherelement (21a, b, c) zugeordnet ist, welches mit der Schiebekette (20) ansteuerbar ist.

3. Lichtschrankenanordnung nach einem der Ansprüche 1 oder 2, **dadurch gekennzeichnet, dass** mit den Anzeigeelementen (19a - 19f) die Ausrichtgüte unterschiedlicher Empfänger (7) angezeigt wird.

4. Lichtschrankenanordnung nach einem der Ansprüche 1 bis 3, **dadurch gekennzeichnet, dass** ein Anzeigeelement (19a - 19f) dem oder den Empfängern (7), deren Ausrichtgüte es anzeigt, räumlich zugeordnet ist.

5. Lichtschrankenanordnung nach einem der Ansprüche 1 bis 4, **dadurch gekennzeichnet, dass** einzelne Anzeigeelemente (19a - 19f) die Strahlunterbrechung bei einzelnen Sendelichtstrahlen (3) oder eine einzelne Strahlenunterbrechung innerhalb einer Gruppe von Sendelichtstrahlen (3) anzeigen.

6. Lichtschrankenanordnung nach einem der Ansprüche 1 bis 5, **dadurch gekennzeichnet, dass** die Anzeigeelemente (19a - 19f) Blinksequenzen von sichtbaren optischen Pulsen emittieren, wobei die Ausrichtgüte in der Frequenz, dem Puls-Pausenverhältnis, der Anzahl von Pulsen in vorgegebenen Pulsgruppen, der Pulsdauern oder der Pausen zwischen Pulsen der sichtbaren optischen Pulse codiert ist.

7. Lichtschrankenanordnung nach einem der Ansprüche 1 bis 6, **dadurch gekennzeichnet, dass** Blinksequenzen eines Anzeigeelements (19a - 19f) durch in dem zugeordneten Anzeigespeicherelement (21a, b, c) gespeicherte Informationen oder über separate Zuleitungen vorgegeben sind.

8. Lichtschrankenanordnung nach einem der Ansprüche 1 bis 7, **dadurch gekennzeichnet, dass** die Sender (4) Sendelichtstrahlen (3) in Form von Lichtimpulsen (3a, 3a`) emittieren.

9. Lichtschrankenanordnung nach Anspruch 8, **dadurch gekennzeichnet, dass** in der Ausrichteinheit als Ausrichtkriterium die Pulsbreiten der am Empfänger (7) registrierten Lichtimpulse (3a, 3') bestimmt werden.

10. Lichtschrankenanordnung nach einem der Ansprüche 1 bis 9, **dadurch gekennzeichnet, dass** als Ausrichtkriterium die Amplituden der Empfangssignale der Empfänger (7) herangezogen werden.

11. Lichtschrankenanordnung nach einem der Ansprüche 1 bis 10, **dadurch gekennzeichnet, dass** diese als Lichtvorhang (1) ausgebildet ist, und/oder dass diese ein Sicherheitssensor ist.

## Claims

1. A light barrier device comprising a transmitter unit (2) and a receiver unit (6), wherein the transmitter unit (2) comprises a plurality of transmitters (4) emitting transmitted light beams (3) and the receiver unit (6) comprises a plurality of receivers (7) receiving transmitted light beams (3), and with an alignment unit for aligning the transmitter unit (2) and receiver unit (6), wherein the alignment unit has an arrangement of display elements (19a-19f) which are controlled by means of a sliding chain (20), **characterised in that** the sliding chain (20) is used to control the activation of the receivers (7), **in that** the display elements (19a - 19f) are addressed with the sliding chain (20), **in that** an alignment quality for one or more receivers (7) is determined in the alignment unit on the basis of alignment criteria, the display elements (19a - 19f) being designed to display alignment qualities, and **in that** the display elements (19a - 19f) are designed as optical display elements.

2. A light barrier device according to claim 1, **characterised in that** each display element (19a - 19f) is assigned a display memory element (21a, b, c) which can be actuated by the sliding chain (20).

3. A light barrier device according to one of claims 1 or 2, **characterised in that** the display elements (19a - 19f) are used to display the alignment quality of different receivers (7).

4. A light barrier device according to one of claims 1 to 3, **characterised in that** a display element (19a - 19f) is spatially assigned to the receiver or receivers (7) whose alignment quality it indicates.

5. A light barrier device according to one of claims 1 to 4, **characterised in that** individual display elements (19a - 19f) indicate the beam interruption in the case of individual transmitted light beams (3) or an individual beam interruption within a group of transmitted light beams (3).

6. A light barrier device according to one of claims 1 to 5, **characterised in that** the display elements (19a - 19f) emit flashing sequences of visible optical pulses, the alignment quality being coded in the frequency, the pulse-pause ratio, the number of pulses in predetermined pulse groups, the pulse durations or the pauses between pulses of the visible optical pulses.

7. A light barrier device according to one of claims 1 to 6, **characterised in that** flashing sequences of a display element (19 - 19f) are predetermined by information stored in the associated display memory element (21a, b, c) or via separate feed lines.

8. A light barrier device according to one of claims 1 to 7, **characterised in that** the transmitters (4) emit transmitted light beams (3) in the form of light pulses (3a, 3a').

9. A light barrier device according to claim 8, **characterised in that** the pulse widths of the light pulses (3a, 3') registered at the receiver (7) are determined in the alignment unit as an alignment criterion.

10. A light barrier device according to one of claims 1 to 9, **characterised in that** the amplitudes of the received signals of the receivers (7) are used as the alignment criterion.

11. A light barrier device according to one of claims 1 to 10, **characterised in that** this is designed as a light curtain (1) and/or **in that** this is a safety sensor.

## Revendications

1. Agencement de barrières lumineuses comprenant une unité émettrice (2) et une unité réceptrice (6), l'unité émettrice (2) comprenant plusieurs émetteurs (4) émettant des faisceaux lumineux transmis (3) et l'unité réceptrice (6) comprenant plusieurs récepteurs (7) recevant des faisceaux lumineux transmis (3), et avec une unité d'alignement pour aligner l'unité émettrice (2) et l'unité réceptrice (6), l'unité d'alignement présentant un arrangement d'éléments d'affichage (19a - 19f) qui sont commandés au moyen d'une chaîne à glissière (20), **caractérisée par le fait que** la chaîne coulissante (20) sert à commander l'activation des récepteurs (7), que les éléments d'affichage (19a - 19f) sont adressés avec la chaîne coulissante (20), qu'une qualité d'alignement pour un ou plusieurs récepteurs (7) est déterminée dans l'unité d'alignement sur la base de critères d'alignement, les éléments d'affichage (19a - 19f) étant conçus pour afficher les qualités d'alignement, et que les éléments d'affichage (19a - 19f) sont conçus comme des éléments d'affichage optiques.

2. Agencement de barrières lumineuses selon la revendication 1, **caractérisé en ce que** chaque élément d'affichage (19a - 19f) se voit attribuer un élément de mémoire d'affichage (21a, b, c) qui peut être actionné par la chaîne coulissante (20).

3. Agencement de barrières lumineuses selon l'une des revendications 1 ou 2, **caractérisé en ce que** les éléments d'affichage (19a - 19f) sont utilisés pour afficher la qualité d'alignement de différents récepteurs (7).

4. Agencement de barrières lumineuses selon l'une des revendications 1 à 3, **caractérisé en ce qu'**un élément d'affichage (19a - 19f) est affecté spatialement au(x) récepteur(s) (7) dont il indique la qualité d'alignement.

5. Agencement de barrières lumineuses selon l'une des revendications 1 à 4, **caractérisé en ce que** les éléments d'affichage individuels (19a - 19f) indiquent l'interruption du faisceau dans le cas de faisceaux lumineux transmis individuels (3) ou une interruption individuelle du faisceau au sein d'un groupe de faisceaux lumineux transmis (3).

6. Agencement de barrières lumineuses selon l'une des revendications 1 à 5, **caractérisé en ce que** les éléments d'affichage (19a - 19f) émettent des séquences clignotantes d'impulsions optiques visibles, la qualité de l'alignement étant codée dans la fréquence, le rapport impulsion-pause, le nombre d'impulsions dans des groupes d'impulsions prédéterminés, les durées d'impulsion ou les pauses entre les impulsions des impulsions optiques visibles.

7. Agencement de barrières lumineuses selon l'une des revendications 1 à 6, **caractérisé en ce que** les séquences de clignotement d'un élément d'affichage (19 - 19f) sont prédéterminées par des informations stockées dans l'élément de mémoire d'affichage associé (21a, b, c) ou par l'intermédiaire de lignes d'alimentation séparées.

8. Agencement de barrières lumineuses selon l'une des revendications 1 à 7, **caractérisé en ce que** les émetteurs (4) émettent des faisceaux lumineux transmis (3) sous forme d'impulsions lumineuses (3a, 3a').

9. Agencement de barrières lumineuses selon la revendication 8, **caractérisé en ce que** les largeurs d'impulsion des impulsions lumineuses (3a, 3') enregistrées au niveau du récepteur (7) sont déterminées dans l'unité d'alignement en tant que critère d'alignement.

10. Agencement de barrières lumineuses selon l'une des revendications 1 à 9, **caractérisé en ce que** les amplitudes des signaux reçus des récepteurs (7) sont utilisées comme critère d'alignement.

11. Agencement de barrières lumineuses selon l'une des revendications 1 à 10, **caractérisé en ce qu'**il est conçu comme une barrière lumineuse (1) et/ou **en ce qu'**il s'agit d'un capteur de sécurité.
